# EUROPEAN PATENT SPECIFICATION

(11) **EP 4 123 227 B1**
(45) Date of publication and mention of the grant of the patent: **01.11.2023**
(21) Application number: 22178988.6
(22) Date of filing: 14.06.2022
(51) Int. Cl.: F24D 19/10, F24D 19/00, F16K 31/00, F16K 27/02, G05D 23/02

(54) **ADAPTER FOR A RADIATOR WITH THERMOSTATIC CONTROL AND USE OF THIS ADAPTER ON A RADIATOR**
ADAPTER FÜR EINEN HEIZKÖRPER MIT THERMOSTATISCHER REGELUNG UND VERWENDUNG DIESES ADAPTERS AN EINEM HEIZKÖRPER
ADAPTATEUR POUR RADIATEUR A COMMANDE THERMOSTATIQUE ET UTILISATION DE CET ADAPTATEUR SUR UN RADIATEUR

(30) Priority: 19.07.2021 BE 202105561
(43) Date of publication of application: 25.01.2023
(73) Proprietor: JAGA NV, 3590 Diepenbeek (BE)
(72) Inventor: RUISON, Mark Antoon Gustaaf, 3780 Heers (BE)
(74) Representative: Jacobs, Tinneke Ivonne C

(56) References cited:
- DE-U1-202009 016 394
- US-A1- 2017 191 595

## Description

The present invention relates to an adapter for a radiator with thermostatic control and use of this adapter on a radiator.

Radiators of a central heating that are equipped with a thermostatic control which allows more or less hot water to flow through the radiator depending on whether the reached temperature in the chamber of the radiator is higher or lower than a set value are already known.

Traditionally, such thermostatic control is composed from an adjustable radiator valve with a linearly slidable shutoff valve with which the passage of the hot water can be shut off more or less and from a cooperating thermostat head with different positions depending on the desired temperature, whereby the thermostat head is provided with an element that can expand and contract depending on the ambient temperature and in this way can control the shutoff valve to open more or less to obtain and maintain the desired temperature.

Both heating and cooling are possible with current heat pumps.

However, radiators with a classic thermostatic control on the radiators cannot be used to cool by sending cooled water through them.

Indeed, when the radiator were to be connected to cold water and when the ambient temperature is then higher than the set desired cooler temperature on the thermostat head, the thermostat head will shut off the radiator valve and thus not allow any cold flow through for cooling.

Document DE 20 2009 016394 U1 shows an adapter comprising the features of the preamble of claim 1.

The purpose of the present invention is, by using an adjustable adapter according to the invention, to still make it possible to use a radiator with an aforementioned thermostatic control not only for heating but also for cooling by adjusting the adapter by ensuring that for cooling, the shutoff valve of the radiator valve is locked in an open position such that cold water can always flow through the radiator without the thermostat head having any influence on this.

The present invention relates to an adapter which is intended for mounting between the radiator valve and the thermostat head, whereby the adapter contains a sleeve with a foot end with which the sleeve can be fastened on the radiator valve and a head end on which the thermostat head can be fastened on the sleeve, whereby in the sleeve a transmission valve is provided which is arranged axially slideable in the sleeve for the axial transmission of the thermostatic control of the thermostat head to the shutoff valve of the radiator valve, whereby the transmission valve is arranged coaxially rotatable in the sleeve between a control position, on the one hand, in which the transmission valve can move over a certain range in an axial direction for the axial transmission of the thermostatic control from the radiator head to the radiator valve and a locked position, on the other hand, in which the transmission valve is locked in an axial direction in a position corresponding with an open position of the shutoff valve characterised in that the transmission valve is provided with at least one radially oriented peg and the sleeve is provided with at least one groove for guiding at least one peg of the transmission valve, whereby the groove is executed substantially L-shaped with a substantially axially oriented leg and a perpendicularly oriented leg thereto.

In this way it is obtained that a simple rotation of the transmission valve of the adapter allows switching from heating to cooling and vice versa, whereby with the adapter in the control position, the control of the thermostat head is transmitted to the radiator valve via the transmission valve in the adapter without obstruction, whereas, with the adapter in the locked position, the shutoff valve of the radiator valve is locked in an open position and thus the influence of the thermostat head is disabled.

With the peg of the transmission valve in the axially oriented leg of the substantially L-shaped groove, the transmission valve can axially move freely for the transmission of the movements of the thermostat head to the radiator valve when using the radiator for heating.

With the peg in the perpendicularly oriented leg the axial movement of the transmission valve is locked and the influence of the thermostat head for cooling is disabled.

Preferably, the adapter is provided with means to manually rotate the transmission valve externally between the aforementioned control position and locked position, which simplifies its operation.

According to a preferred practical embodiment, the means to rotate the transmission valve are formed by at least one peg protruding from the groove outwardly radially with an end and by a control ring being arranged coaxially around the sleeve and being provided with a pusher to be able to push at least one peg with it in its rotational movement.

Moving the adapter from control position to locked position is thus very simple by rotation of the control ring.

Preferably, the adapter is provided with indication means which, in the mounted condition of the adapter, make it possible to see whether the transmission valve is in the control position or in the locked position, for example with a red mark in the control position for heating and a blue mark for the locked position for cooling.

The invention also relates to the use of a combination of a radiator valve and thermostat head with an adapter according to the invention in between, on a radiator of a central heating, characterised in that for the use of the radiator for heating, the transmission valve of the adapter is put in control position, whereas for the use of the radiator for cooling, the transmission valve is put in its locked position.

Thus, such radiator can be used both for heating and cooling.

With the intention of better showing the characteristics of the invention, a preferred embodiment of an adapter according to the invention is described hereinafter, by way of an example without any limiting nature, with reference to the accompanying drawings wherein:
figure 1 schematically shows a known combination of a radiator valve and of a thermostat head;
figure 2 shows a cross-section of the combination of figure 1 in assembled condition
figure 3 shows a combination as those of figures 1 and 2 but with an extra adapter according to the invention;
figure 4 shows a cross-section of the combination of figure 3 in assembled condition;
figure 5 shows a perspective view of the adapter indicated in figure 3 with arrow F3;
figure 6 shows the adapter of figure 5 in disassembled condition;
figure 7 shows a view according to arrow F7 in figure 5;
figure 8 shows a cross-section according to line VIII-VIII in figure 7;
figure 9 shows the adapter of figure 5 in a position for cooling;
figure 10 shows a cross-section of the adapter of figure 9;
figures 11 and 12 are figures as those of figures 9 and 10, but with the adapter in a heating position.

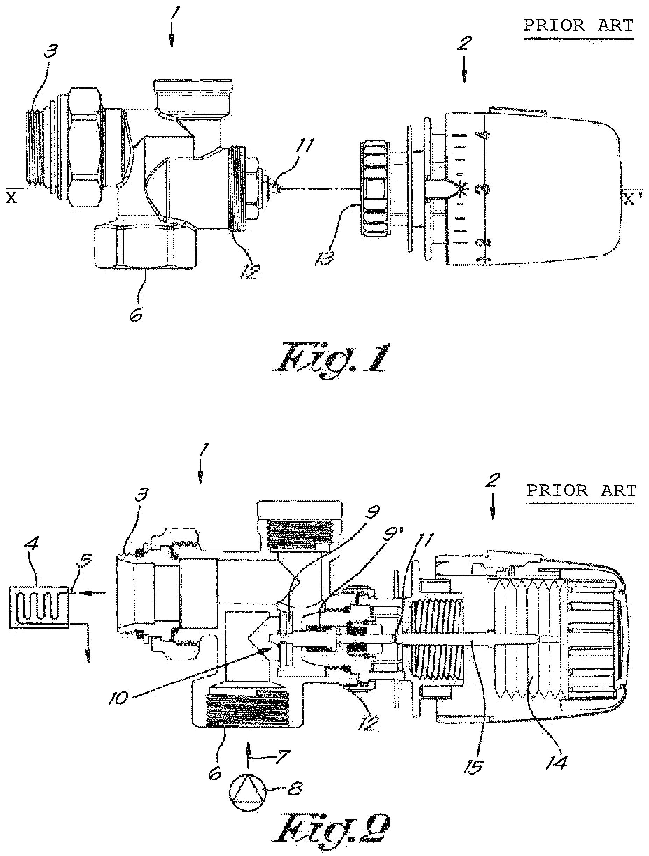

The combination of figures 1 and 2 traditionally contains a radiator valve 1 and a thermostat head 2.

The radiator valve 1 is provided with a screw thread 3 with which the radiator valve 1 can be screwed on the inlet 5 of a radiator 4 and which is provided with an inlet 6 for connection to the circuit 7 of a central heating for the supply of hot water to the circuit 7 which, for example, is provided with a pump 8 to circulate the hot water via the radiator valve 1 through the radiator 4.

The radiator valve 1 is provided with a shutoff valve 9 which can shut off a passage 10 for the water in the radiator valve 1 more or less to thus control the flow of water to the radiator.

The shutoff valve 9 is provided with a valve shaft 11, a section of which protrudes outwardly and with which the shutoff valve 9 is slideably arranged in the direction X-X' in the radiator valve 1.

The shutoff valve 9 is held in an open resting position by means of a return spring 9', such that by pushing in the valve shaft 11 in the direction X-X' the passage 10 is more or less shut off.

The radiator valve 1 is provided with a screw thread 12 around the valve shaft 11 on which the thermostat head 2 can be screwed as shown in figure 2 and which to this end is provided with a complementary screw thread 13.

The thermostat head 2 is provided with a thermostatic element 14 that can expand and contract in an axial direction X-X' depending on the ambient temperature, for example an element 14 in the form of a bellows which is filled with wax or another liquid.

The thermostatic element 14 is provided with a pin 15 which in the mounted condition of figure 2 can push on the valve shaft 11 of the radiator valve 2 in the direction X-X' for the thermostatic control of the radiator valve 2.

The desired ambient temperature is adjustable by rotation of the control button of the thermostat head 2.

When the ambient temperature is lower than the set desired temperature, the thermostatic element 14 will be contracted and the shutoff valve 9 will be pushed open under the influence of the return spring 9' to allow hot water to flow through to the radiator 4.

Consequently, the ambient temperature will increase and the thermostatic element 14 will expand which will further push shut the shutoff valve 9 against the spring force of the return spring 9' such that less hot water is allowed to flow through, until the desired ambient temperature is reached.

If the temperature starts to drop again, the thermostatic element 14 will contract again, such that the radiator valve 1 opens again to allow more hot water through to heat up the environment again.

However, using this classic combination 1-2 of figure 2 for cooling by using cooled water, for example, instead of hot water will not be possible because the thermostatic element 14 will sense a temperature that is higher than the desired colder temperature and will thus push shut the radiator valve 1 and prevent cold water from flowing through to the radiator 4.

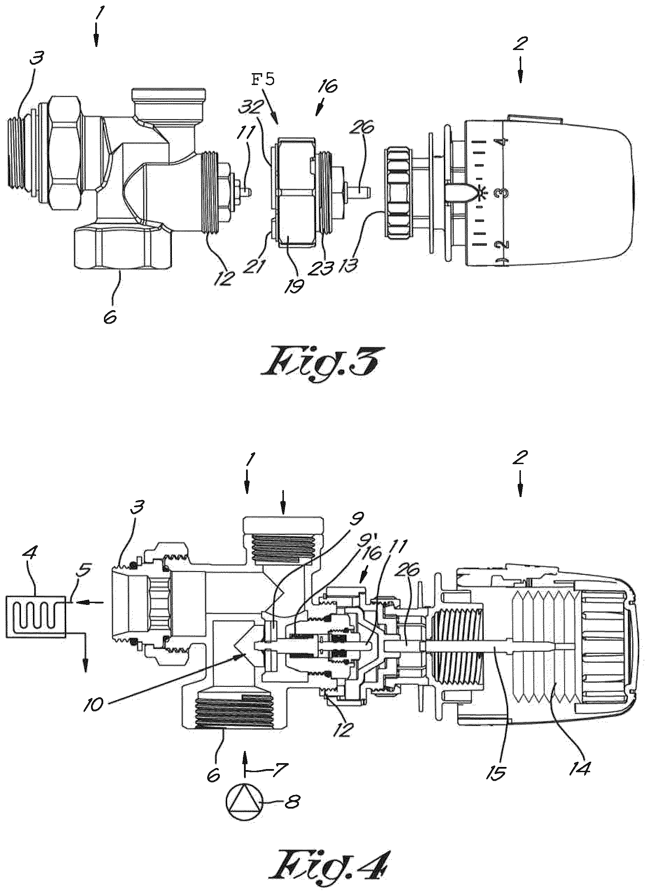

In figures 3 and 4, an extra adapter 16 according to the invention is added to the known classic combination 1-2 of radiator valve 1 and thermostat head 2 between the radiator valve 1 and the thermostat head 2 as shown in figure 4.

The adapter 16 is, as will be explained further, provided with two positions, i.e. a control position for a thermostatic control for heating with hot water and a locked position for cooling with cooled water, whereby the radiator valve 1 is locked in an open position and consequently the control of the thermostatic element 14 is disabled.

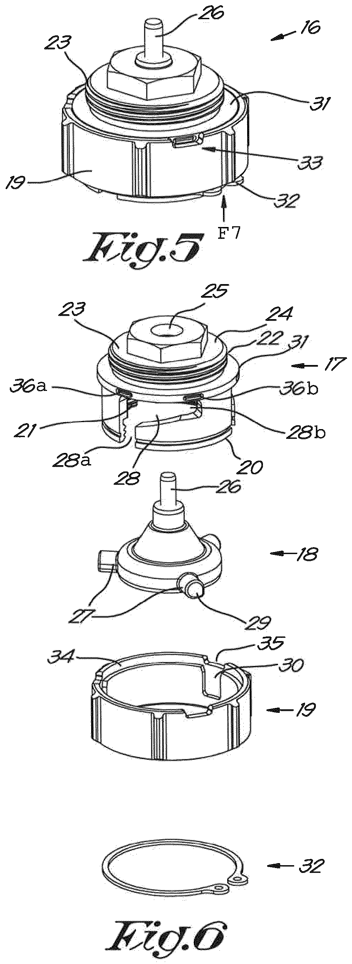

As shown in more detail in figures 5 to 12, the adapter 16 contains a housing in the form of a substantially cylindrical sleeve 17 with a transmission valve 18 therein which in the axial direction X-X' is slideably arranged in the sleeve 17 and a control ring 19 or other control element around the sleeve 17 to switch between the aforementioned control position and locked position of the adapter 16.

At the foot end 20, the sleeve 17 is provided with a screw thread 21 with which the sleeve 17 can be screwed on the screw thread 12 of the radiator valve 1.

At the head end 22, the sleeve 17 is provided with a screw thread 23 on which the thermostat head 2 can be screwed with its screw thread 13.

The head end 22 of the adapter 16 is provided with a closing wall 24 with a central bore 25.

The transmission valve 18 is provided with a plunger 26 which is guided through the aforementioned bore 25 and protrudes therefrom by a certain length, whereby the plunger 26, in the mounted condition of figure 4, extends in the direction X-X' between, and in line with, the valve shaft 11 of the radiator valve 1 and the pin 15 of the thermostatic element 14.

In this case, the transmission valve 18 is provided with three radially oriented pegs 27, whereas the sleeve 17, for each peg 27, is provided with a groove 28 for guiding the pegs 27 of the transmission valve 18, whereby each substantially L-shaped groove 28 is executed with a substantially axially oriented leg 28a parallel to the axial direction X-X' and a perpendicularly oriented leg 28b thereto.

The pegs 27 slightly protrude radially through the groove 28 with their free end 29 relative to the outer contour of the sleeve 17.

There can be more or fewer pegs 27.

The free end of the axially oriented leg 28a of the L-shaped groove 28 is oriented toward the foot end 20 of the sleeve 17 and opens to the edge of the foot end 20 of the sleeve 17 to facilitate mounting the transmission valve 18 in the sleeve 17 when assembling the adapter 16.

The perpendicularly oriented leg 28b connects to the other end of the axially oriented leg 28a, in other words to the end of the axial leg 28a that is oriented to the closing wall.

The width of the perpendicular leg 28b of the groove 28 is equal to or slightly bigger than the width of the peg, such that the pegs 27 of the transmission valve 18 are fittingly rotatable in said leg 28b in such a way that an axial movement with the peg 27 in this perpendicular leg 28b is practically locked.

This situation corresponds with the aforementioned locked position for the use with cooling, whereby the pin 15 of the thermostatic element 14 is pushed back and the axial transmission of the movements of the thermostatic element 14 is prevented.

The location of the perpendicularly oriented leg 28b is such that in the locked position of the adapter 16, the shutoff valve 9 of the radiator valve 1 is pushed open by the return spring 9'.

When the pegs 27 of the transmission valve 18 are rotated from the locked position to opposite the axially oriented leg 28a, the valve is free to move axially with its pegs 27 (being) guided axially in the axially oriented legs 28a.

This corresponds with the control position of the adapter 16 whereby the shutoff valve 9 is able to follow the axial expansion and contraction of the thermostatic element 14 and transmit it to the shutoff valve 9 of the radiator valve 1 for a thermostatic control when using the radiator 4 for heating.

For a gradual transition between the two positions the inner corner of the L-shaped groove 28 is provided with a chamfer 28c.

The adapter 16 is provided with means to be able to manually rotate the transmission valve 18 from the outside between the aforementioned control position and locked position.

In the example of the figures, said means are formed by the aforementioned control ring 19 which is arranged coaxially rotatable around the sleeve 17 and is provided with pushers 30 to take at least the pegs 27 with it in its rotational movement, for example pushers in the form of recesses in which the aforementioned end 29 of the pegs 27 is enclosed.

In the example, the control ring 19 is enclosed in an axial direction X-X' between a collar 31 of the sleeve 17 and a locking washer 32 mounted around the sleeve 17.

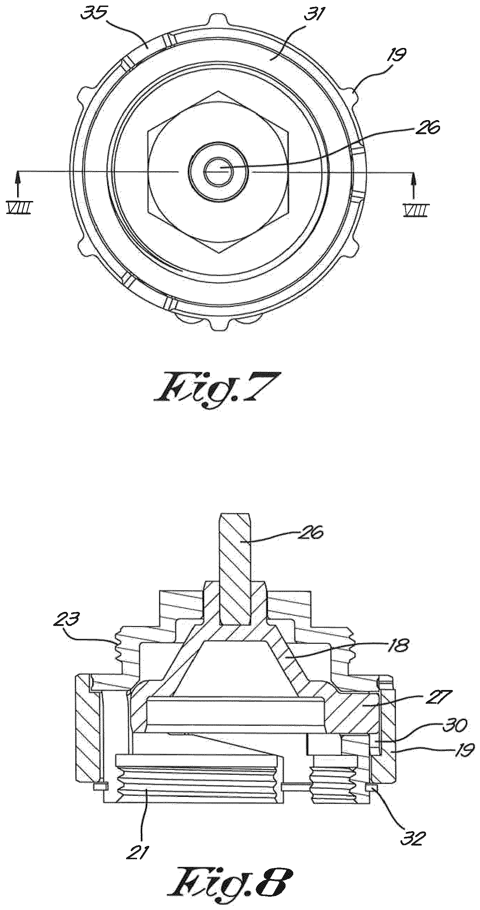

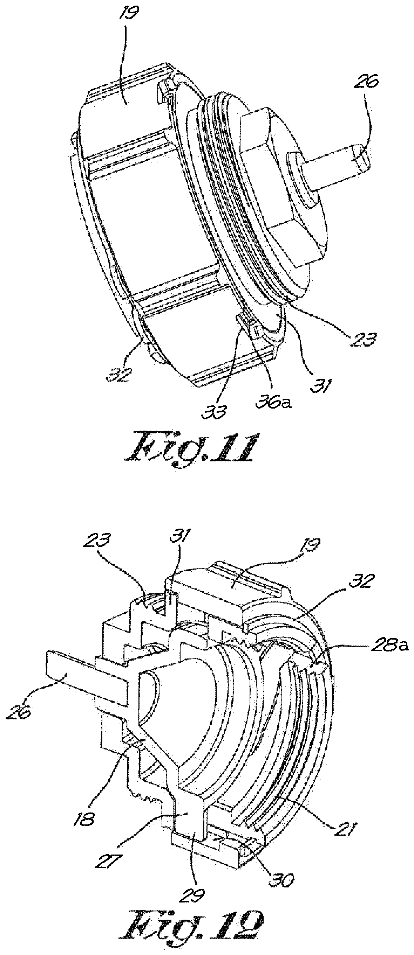

The locked position with the pegs 27 in the perpendicularly oriented legs 28b of the L-shaped groove 28 is shown in figures 8 to 10, whereas the control position with the pegs 27 in the axially oriented legs 28a is shown in figures 11 and 12.

Further, the adapter 16 can be provided with indication means 33 which in the mounted condition of the adapter 16 make it possible to see from the outside whether the adapter 16 is in the control position or in locked position.

In the example of the figures, said indication means 33 are formed by an edge 34 of the control ring 19 engaging over the aforementioned collar 31 of the sleeve 17 and a window 35 being recessed in this edge 34, whereby along the contour of the collar 31 at least one pair of marks 36 is applied, one mark 36a for the control position for heating and one mark 36b for the locked position for cooling, of which, depending on the position of the transmission valve 18, only one is visible in the window 35 of the control ring 19.

The mark 36a for the control position can, for example, be red to indicate the position for heating, whereas the other mark 36b can, for example, be blue to indicate the use for cooling.

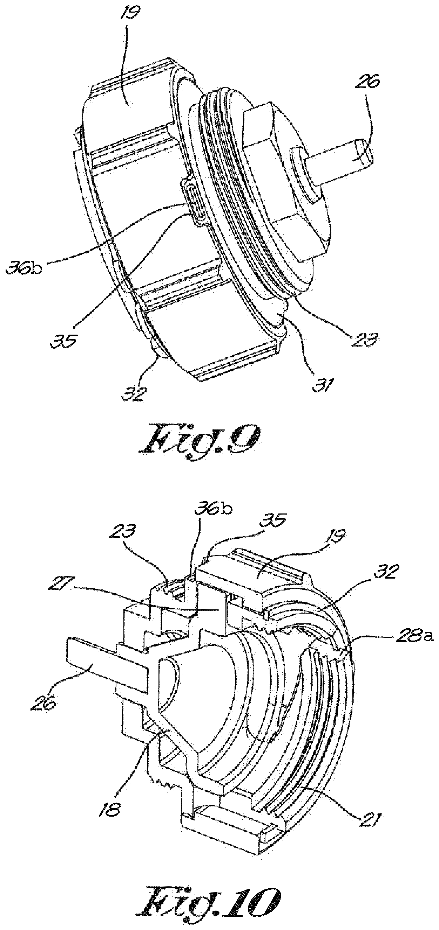

In the example there are three windows 35 and three corresponding pairs of blue and red marks 36. In the locked position of the figures 9 and 10 the blue marks are visible, whereas in the control position of the figures 11 and 12 the blue marks are visible.

## Claims

1. Adapter for a radiator with a thermostatic control with a thermostatisable radiator valve (1) with a linearly slidable shutoff valve (9) and a cooperating thermostat head (2) for the thermostatic control of the radiator valve (1), whereby the adapter (16) is intended for mounting between the radiator valve (1) and the thermostat head (2), whereby the adapter (16) contains a sleeve (17) with a foot end (20) with which the sleeve (17) can be fastened on the radiator valve (1) and a head end (22) on which the thermostat head (2) can be fastened on the sleeve (17), whereby in the sleeve (17) a transmission valve (18) is provided which is arranged axially slideable in the sleeve (17) for the axial transmission of the thermostatic control of the thermostat head (2) to the shutoff valve (9) of the radiator valve (1), whereby the transmission valve (18) is arranged coaxially rotatable in the sleeve (17) between a control position, on the one hand, in which the transmission valve (18) can move over a certain range in an axial direction for the axial transmission of the thermostatic control from the radiator head to the radiator valve (1) and a locked position, on the other hand, in which the transmission valve (18) is locked in an axial direction in a position corresponding with an open position of the shutoff valve (9), **characterised in that** the transmission valve (18) is provided with at least one radially oriented peg (27) and the sleeve (17) is provided with at least one groove (28) for guiding at least one peg (27) of the transmission valve (18), whereby the groove (28) is executed substantially L-shaped with a substantially axially oriented leg (28a) and a perpendicularly oriented leg thereto (28b).

2. Adapter according to claim 1, **characterised in that** the perpendicular leg (28b) of the groove (28) has a width which substantially corresponds with the width of the peg, except possibly in the connection to the axial leg (28a) where the groove (28) locally is provided with a chamfer in the inner corner of the groove (28).

3. Adapter according to claim 1 or 2, **characterised in that** the axially oriented leg (28a) of the L-shaped groove (28) is oriented toward the foot end (20) of the sleeve (17) and opens to the edge of the foot end (20).

4. Adapter according to any one of the previous claims, **characterised in that** it is provided with means to be able to manually rotate the transmission valve (18) between the aforementioned control position and locked position from the outside.

5. Adapter according to claim 4 and one of the claims 1 to 3, **characterised in that** the means to rotate the transmission valve (18) are formed by at least one peg (27) outwardly protruding with an end through the groove (28) from the sleeve radially and by a control ring being arranged coaxially around the sleeve (17) and being provided with a pusher (30) to be able to push at least one peg (27) with it in its rotational movement.

6. Adapter according to claim 5, **characterised in that** the pusher (30) is formed by a recess on the inside of the control ring (19) in which the end of the peg (27) is enclosed.

7. Adapter according to claim 6, **characterised in that** the recess forms a channel which departs in an axial direction from a free edge of the control ring (19).

8. Adapter according to any one of the claims 5 to 7, **characterised in that** the control ring (19) is enclosed in an axial direction around the sleeve (17) between a collar (31) of the sleeve (17) and a locking washer (32) mounted around the sleeve (17).

9. Adapter according to any one of the claims 5 to 8, **characterised in that** the adapter (16) is provided with indication means (33) which make it possible to see in the mounted condition of the adapter (16) whether the transmission valve (18) is in the control position or in locked position.

10. Adapter according to claims 8 and 9, **characterised in that** said indication means (33) are formed by an edge (34) of the control ring (19) engaging over the aforementioned collar (31) of the sleeve (17) and a window (35) being recessed in said edge (3), whereby along the contour of the collar (31) at least one pair of marks is applied, one mark (36a) for the control position and one mark (36b) for the locked position, of which, depending on the position of the transmission valve (18), only one is visible in the window (35) of the control ring (19).

11. Adapter according to claim 10, **characterised in that** one of both marks (36a) is red to indicate the control position of the transmission valve (18) used for thermostatic control of the radiator valve (1) when using the radiator for heating and the other mark (36b) is blue to indicate the locked position of the transmission valve (18) used to lock the shutoff valve (9) in an open position when using the radiator for cooling.

12. Adapter according to any one of the previous claims, **characterised in that** the head end (22) of the sleeve (17) is closed by a closing wall (24) and that the transmission valve (18) of the adapter (16) is provided with an axially oriented plunger (26) which radially protrudes through a bore (25) in the closing wall (24) and which in mounted condition is intended to follow the control movements of the thermostat head (2) and transmit them via the transmission valve (18) to the radiator valve (1).

13. Adapter according to any one of the previous claims, **characterised in that** the transmission valve (18) is provided with three radially protruding pegs (27) which are evenly distributed along the contour of the transmission valve (18) and **in that** for every peg (27) the sleeve (17) is provided with a corresponding L-shaped groove (28).

14. Adapter according to any one of the previous claims, **characterised in that** the foot end (20) of the sleeve (17) is provided with a screw thread (21) with which the adapter (16) can be screwed on the radiator valve (1) and the head end (22) is provided with a screw thread (23) on which the thermostat head (2) can be screwed.

15. Combination of a radiator valve (1) and thermostat head (2) with an adapter (16) in between according to any one of the previous claims.

16. Use of a combination according to claim 15 on a radiator (4) of a central heating, **characterised in that** for the use of the radiator (4) for heating, the transmission valve (18) of the adapter (16) is put in its control position, whereas for the use of the radiator (4) for cooling the transmission valve (18) is put in its locked position.

## Patentansprüche

1. Adapter für einen Heizkörper, der eine thermostatische Steuerung umfasst, die ein thermostatisierbares Heizkörperventil (1) umfasst, das ein linear verschiebbares Absperrventil (9) und einen kooperierenden Thermostatkopf (2) für die thermostatische Steuerung des Heizkörperventils (1) umfasst, wobei der Adapter (16) zur Montage zwischen dem Heizkörperventil (1) und dem Thermostatkopf (2) vorgesehen ist, wobei der Adapter (16) eine Hülse (17) enthält, die ein Fußende (20) umfasst, mit dem die Hülse (17) an dem Heizkörperventil (1) befestigbar ist, und ein Kopfende (22) umfasst, an dem der Thermostatkopf (2) an der Hülse (17) befestigbar ist, wobei ein Getriebeventil (18) in der Hülse (17) vorgesehen ist, das axial verschiebbar ist, um die thermostatische Steuerung des Thermostatkopfes (2) axial auf das Absperrventil (9) des Heizkörperventils zu übertragen, wobei das Getriebeventil (18) koaxial drehbar in der Hülse (17) angeordnet ist, zwischen einer Steuerstellung einerseits, in der das Getriebeventil (18) über einen bestimmten Bereich in axialer Richtung zur axialen Übertragung der thermostatischen Regelung von dem Heizkörperkopf auf das Heizkörperventil (1) bewegen kann, und eine verriegelte Stellung andererseits, in der das Getriebeventil (18) in axialer Richtung in einer Stellung verriegelt ist, die einer Öffnungsstellung des Absperrventils (9) entspricht, **dadurch gekennzeichnet, dass** das Getriebeventil (18) mit mindestens einem radial orientierten Zapfen (27) versehen ist, und die Hülse (17) mit mindestens einer Nut (28) zum Führen mindestens eines Zapfens (27) des Getriebeventils (18) versehen ist, wobei die Nut (28) im Wesentlichen in einer L-Form ausgeführt ist, die einen im Wesentlichen axial orientierten Schenkel (28a) und einen dazu senkrecht ausgerichteten Schenkel (28b) umfasst.

2. Adapter nach Anspruch 1, **dadurch gekennzeichnet, dass** der senkrechte Schenkel (28b) der Nut (28) eine Breite aufweist, die im Wesentlichen der Breite des Zapfens entspricht, außer möglicherweise in der Verbindung mit dem axialen Schenkel (28a), wo die Nut (28) lokal mit einer Fase in der Innenecke der Nut (28) versehen ist.

3. Adapter nach Anspruch 1 oder 2, **dadurch gekennzeichnet, dass** der axial orientierte Schenkel (28a) der L-förmigen Nut (28) in Richtung des Fußendes (20) der Hülse (17) ausgerichtet ist und sich bis zum Rand des Fußendes (20) öffnet.

4. Adapter nach einem der vorhergehenden Ansprüche, **dadurch gekennzeichnet, dass** er mit Mitteln versehen ist, um das Getriebeventil (18) zwischen der vorgenannten Steuerstellung und der verriegelten Stellung von außen manuell drehen zu können.

5. Adapter nach Anspruch 4 und einem der Ansprüche 1 bis 3, **dadurch gekennzeichnet, dass** die Mittel zum Drehen des Getriebeventils (18) durch mindestens einen Zapfen (27) gebildet sind, der mit einem Ende radial durch die Nut (28) von der Hülse nach außen ragt, und durch einen Steuerring, der koaxial um die Hülse (17) angeordnet ist und der mit einem Drücker (30) versehen ist, um wenigstens einen Zapfen (27) in seiner Drehbewegung damit schieben zu können.

6. Adapter nach Anspruch 5, **dadurch gekennzeichnet, dass** der Drücker (30) durch eine Ausnehmung an der Innenseite des Steuerrings (19) gebildet ist, in der das Ende des Zapfens (27) eingeschlossen ist.

7. Adapter nach Anspruch 6, **dadurch gekennzeichnet, dass** die Ausnehmung einen Kanal bildet, der in axialer Richtung von einem freien Rand des Steuerrings (19) abweicht.

8. Adapter nach einem der Ansprüche 5 bis 7, **dadurch gekennzeichnet, dass** der Steuerring (19) in axialer Richtung um die Hülse (17) zwischen einem Kragen (31) der Hülse (17) und einer um die Hülse (17) angeordneten Sicherungsscheibe (32) eingeschlossen ist.

9. Adapter nach einem der Ansprüche 5 bis 8, **dadurch gekennzeichnet, dass** der Adapter (16) mit Anzeigemitteln (33) versehen ist, die es ermöglichen, im montierten Zustand des Adapters (16) zu sehen, ob das Übertragungsventil (18) in der Steuerposition oder in der verriegelten Position ist.

10. Adapter nach den Ansprüchen 8 und 9, **dadurch gekennzeichnet, dass** die Anzeigemittel (33) durch einen Rand (34) des Steuerringes (19), der über den vorgenannten Kragen (31) der Hülse (17) eingreift, und durch ein Fenster (35), das in den Rand (3) eingelassen ist, gebildet sind, wobei mindestens ein Paar Markierungen entlang der Kontur des Kragens (31) angebracht ist, eine Markierung (36a) für die Steuerstellung und eine Markierung (36b) für die Verriegelungsstellung, von denen in Abhängigkeit von der Position des Getriebeventils (18) nur eine in dem Fenster (35) des Steuerringes (19) sichtbar ist.

11. Adapter nach Anspruch 10, **dadurch gekennzeichnet, dass** eine der beiden Marken (36a) rot ist, um die Steuerposition des Getriebeventils (18) anzuzeigen, das bei Verwendung des Heizkörpers zum Heizen zur thermostatischen Steuerung des Heizkörperventils (1) verwendet wird, und die andere Marke (36b) blau ist, um die verriegelte Stellung des Getriebeventils (18) anzuzeigen, das zum Verriegeln des Absperrventils (9) in einer offenen Position verwendet wird, wenn der Heizkörper zum Kühlen verwendet wird.

12. Adapter nach einem der vorhergehenden Ansprüche, **dadurch gekennzeichnet, dass** das Kopfende (22) der Hülse (17) durch eine Schließwand (24) verschlossen ist und dass das Getriebeventil (18) des Adapters (16) mit einem axial orientierten Kolben (26) versehen ist, der radial durch eine Bohrung (25) in die Schließwand (24) ragt und der, im montierten Zustand dazu bestimmt ist, den Regelbewegungen des Thermostatkopfes (2) zu folgen und diese über das Übertragungsventil (18) an das Heizkörperventil (1) weiterzuleiten.

13. Adapter nach einem der vorhergehenden Ansprüche, **dadurch gekennzeichnet, dass** das Getriebeventil (18) mit drei radial vorstehenden Zapfen (27) versehen ist, die gleichmäßig entlang der Kontur des Getriebeventils (18) verteilt sind, und dass für jeden Zapfen (27) die Hülse (17) mit einer entsprechenden L-förmigen Nut (28) versehen ist.

14. Adapter nach einem der vorhergehenden Ansprüche, **dadurch gekennzeichnet, dass** das Fußende (20) der Hülse (17) mit einem Schraubgewinde (21) versehen ist, mit dem der Adapter (16) auf das Heizkörperventil (1) schraubbar ist, und das Kopfende (22) mit einem Schraubgewinde (23) versehen ist auf die der Thermostatkopf (2) aufgeschraubt werden kann.

15. Kombination eines Heizkörperventils (1) und Thermostatkopfes (2) mit einem dazwischen angebrachten Adapter (16) nach einem der vorhergehenden Ansprüche.

16. Verwendung einer Kombination nach Anspruch 15 an einem Heizkörper (4) einer Zentralheizung, **dadurch gekennzeichnet, dass** für die Verwendung des Heizkörpers (4) zum Heizen das Übertragungsventil (18) des Adapters (16) in seine Steuerstellung gebracht wird, während für die Verwendung des Heizkörpers (4) zum Kühlen das Getriebeventil (18) in seine verriegelte Stellung gebracht wird.

## Revendications

1. Adaptateur pour un radiateur qui comprend une commande thermostatique qui est équipée d'une vanne de radiateur thermostatique (1) comprenant une vanne de fermeture (9) apte à coulisser de manière linéaire et une tête de thermostat coopérante (2) pour la commande thermostatique de la vanne de radiateur (1), dans lequel l'adaptateur (16) est prévu pour être monté entre la vanne de radiateur (1) et la tête de thermostat (2), dans lequel l'adaptateur (16) contient un manchon (17) qui comprend une extrémité (20) faisant office de base avec laquelle le manchon (17) peut être fixé sur la vanne de radiateur (1) et une extrémité (22) faisant office de tête sur laquelle la tête de thermostat (2) peut être fixée sur le manchon (17), dans lequel, dans le manchon (17), on prévoit une vanne de transmission (18) qui est conçue pour pouvoir coulisser dans la direction axiale dans le manchon (17) pour la transmission axiale de la commande thermostatique de la tête de thermostat (20) à la vanne de fermeture (9) de la vanne de radiateur (1), dans lequel la vanne de transmission (18) est disposée de manière à pouvoir effectuer des rotations en position coaxiale dans le manchon (17) entre une position de commande, d'une part, dans laquelle la vanne de transmission (18) peut se déplacer sur une certaine distance dans une direction axiale pour la transmission axiale de la commande thermostatique à partir de la tête de radiateur jusqu'à la vanne de radiateur (1), et une position verrouillée, d'autre part, dans laquelle la vanne de transmission (18) est verrouillée dans une direction axiale dans une position qui correspond à une position ouverte de la vanne de fermeture (9), **caractérisé en ce que** la vanne de transmission (18) est munie d'au moins une cheville (27) orientée dans la direction radiale et le manchon (17) est muni d'au moins une rainure (28) pour le guidage d'au moins une cheville (27) de la vanne de transmission (18), dans lequel la rainure (28) est réalisée en une configuration essentiellement en forme de L qui comprend une branche (28a) qui est orientée essentiellement dans la direction axiale et une branche (28b) qui est orientée perpendiculairement à la première citée.

2. Adaptateur selon la revendication 1, **caractérisé en ce que** la branche perpendiculaire (28b) de la rainure (28) possède une largeur qui correspond de manière essentielle à la largeur de la cheville, à l'exception le cas échéant dans la liaison à la branche axiale (28a), où la rainure (28) est munie localement d'un chanfrein dans le coin interne de la rainure (28).

3. Adaptateur selon la revendication 1 ou 2, **caractérisé en ce que** la branche (28a) qui est orientée dans la direction axiale, de la rainure (28) qui possède une configuration en forme de L, est orientée dans la direction de l'extrémité (20) du manchon (17), faisant office de base, et s'ouvre sur le bord de l'extrémité (20) faisant office de base.

4. Adaptateur selon l'une quelconque des revendications précédentes, **caractérisé en ce qu'**il est équipé de moyens qui rendent possible une mise en rotation manuelle de la vanne de transmission (18) entre la position de commande et la position verrouillée qui ont été mentionnées ci-dessus, depuis l'extérieur.

5. Adaptateur selon la revendication 4 et selon l'une quelconque des revendications 1 à 3, **caractérisé en ce que** les moyens destinés à la mise en rotation de la vanne de transmission (18) sont réalisés par l'intermédiaire d'au moins une cheville (27) qui fait saillie vers l'extérieur avec une extrémité à travers la rainure (28) à partir du manchon dans la direction radiale, et par l'intermédiaire d'un anneau de commande qui est disposé en position coaxiale autour du manchon (17) et qui est muni d'un dispositif de poussée (30) pour pouvoir pousser au moins une cheville (27) avec le dispositif en question, dans son mouvement rotatif.

6. Adaptateur selon la revendication 5, **caractérisé en ce que** le dispositif de poussée (30) est réalisé par l'intermédiaire d'un évidement sur le côté interne de l'anneau de commande (19), dans lequel l'extrémité de la cheville (27) est insérée.

7. Adaptateur selon la revendication 6, **caractérisé en ce que** l'évidement formant un canal qui s'écarte, dans une direction axiale, d'un bord libre de l'anneau de commande (19).

8. Adaptateur selon l'une quelconque des revendications 5 à 7, **caractérisé en ce que** l'anneau de commande (19) entoure, dans une direction axiale, le manchon (17) entre un rebord (31) du manchon (17) et une rondelle de verrouillage (32) qui est montée autour du manchon (17).

9. Adaptateur selon l'une quelconque des revendications 5 à 8, **caractérisé en ce que** l'adaptateur (16) est équipé de moyens d'indication (33) qui rendent possible, à l'état monté de l'adaptateur (16), le fait de savoir si la vanne de transmission (18) se trouve dans la position de commande ou dans la position verrouillée.

10. Adaptateur selon les revendications 8 et 9, **caractérisé en ce que** lesdits moyens d'indication (33) sont réalisés par l'intermédiaire d'un bord (34) de l'anneau de commande (19) qui vient se mettre en contact par-dessus le rebord (31) du manchon (17), qui a été mentionné ci-dessus, et par l'intermédiaire d'une fenêtre (35) que l'on obtient par évidement dans le bord en question (3), dans lequel, le long du contour du rebord (31) on applique au moins une paire de repères, un repère (36a) pour la position de commande et un repère (36b) pour la position verrouillée, parmi lesquels, en fonction de la position de la vanne de transmission (18), seulement un est visible dans la fenêtre (35) de l'anneau de commande (19).

11. Adaptateur selon la revendication 10, **caractérisé en ce qu'**un repère parmi les deux repères est rouge pour indiquer la position de commande de la vanne de transmission (18) que l'on utilise pour la commande thermostatique de la vanne de radiateur (1) lorsque l'on utilise le radiateur pour chauffer, et l'autre repère (36b) est bleu pour indiquer la position verrouillée de la vanne de transmission (18) que l'on utilise pour verrouiller la vanne de fermeture (9) dans une position ouverte lorsqu'on utilise le radiateur pour refroidir.

12. Adaptateur selon l'une quelconque des revendications précédentes, **caractérisé en ce que** l'extrémité (22) du manchon (17), qui fait office de tête, est fermée par une paroi de fermeture (24), et **en ce que** la vanne de transmission (18) de l'adaptateur (16) est équipée d'un piston plongeur (26) qui est orienté dans la direction axiale, qui fait saillie dans la direction axiale à travers un alésage (25) pratiqué dans la paroi de fermeture (24) et qui, à l'état monté, est destiné à suivre les mouvements de commande de la tête de thermostat (2) et à les transmettre en passant par la vanne de transmission (18) à la vanne de radiateur (1).

13. Adaptateur selon l'une quelconque des revendications précédentes, **caractérisé en ce que** la vanne de transmission (18) est équipée de trois chevilles (27) qui font saillie dans la direction radiale, qui sont distribuées de manière uniforme le long du contour de la vanne de transmission (18), et **en ce que**, pour chaque cheville (27), le manchon (17) est muni d'une rainure correspondante (28) qui possède une configuration en forme de L.

14. Adaptateur selon l'une quelconque des revendications précédentes, **caractérisé en ce que** l'extrémité (20) du manchon (17), faisant office de base, est équipée d'un filet de vis (21) avec lequel l'adaptateur (16) peut être vissé sur la vanne de radiateur (1) et l'extrémité (22) faisant office de tête est équipée d'un filet de vis (23) sur laquelle peut être vissée la tête de thermostat (2).

15. Combinaison d'une vanne de radiateur (1) et d'une tête de thermostat (2) avec, entre les deux, un adaptateur (16) en conformité avec l'une quelconque des revendications précédentes.

16. Utilisation d'une combinaison selon la revendication 15 sur un radiateur (4) d'un chauffage central, **caractérisé en ce que**, pour l'utilisation du radiateur (4) pour le chauffage, la vanne de transmission (18) de l'adaptateur (16) est placée dans sa position de commande, tandis que pour l'utilisation du radiateur (4) pour le refroidissement, la vanne de transmission (18) est placée dans sa position verrouillée.
